Europäisches Patentamt

**European Patent Office**

Office européen des brevets

(11) Publication number: **0 222 993 B1**

## EUROPEAN PATENT SPECIFICATION

(45) Date of publication of patent specification: **06.11.91**    (51) Int. Cl.⁵: **G01N 21/35, G01N 21/61**

(21) Application number: **86111872.7**

(22) Date of filing: **27.08.86**

(54) Sensitivity-calibration circuit for absorption analyzers.

(30) Priority: **09.11.85 JP 251524/85**

(43) Date of publication of application:
**27.05.87 Bulletin 87/22**

(45) Publication of the grant of the patent:
**06.11.91 Bulletin 91/45**

(84) Designated Contracting States:
**AT BE CH DE FR GB IT LI NL SE**

(56) References cited:
| | |
|---|---|
| EP-A- 0 046 389 | DD-A- 132 814 |
| DD-A- 154 915 | US-A- 3 840 305 |
| US-A- 4 167 665 | US-A- 4 358 679 |

(73) Proprietor: **HORIBA, LTD.**
**2 Miyanohigashi-machi Kissyoin**
**Minami-ku Kyoto(JP)**

(72) Inventor: **Kihara, Nobutaka**
**4-24, 1-chome Chiyogaoka**
**Nara(JP)**
Inventor: **Asano, Ichiro**
**330-410, Bodaiji Kousei-cho**
**Kouka-gun Shiga-prefecture(JP)**
Inventor: **Kojima, Kennosuke**
**46-9, Fujimidai Ohtsu-city**
**Shiga-prefecture(JP)**

(74) Representative: **TER MEER - MÜLLER - STEIN-**
**MEISTER & PARTNER**
**Mauerkircherstrasse 45**
**W-8000 München 80(DE)**

## Description

The present invention relates to a sensitivity-calibration circuit for an absorption analyzer, such as non-dispersion type infrared analyzer, colorimetric analyzer and spectrophotometric analyzer, in particular in an absorption analyzer provided with a check-signal generating mechanism so that the sensitivity can be easily checked without requiring the continuous use of a span-calibration sample.

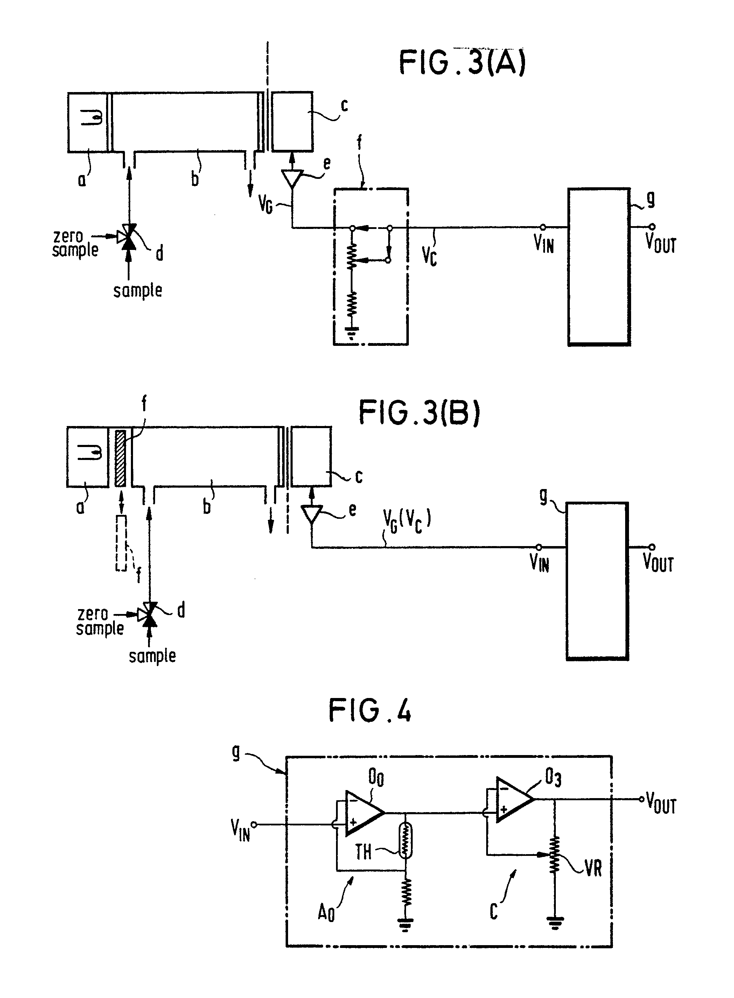

FIG. 3(A) of the accompanying drawings shows one example of a fundamental non-dispersion type absorption analyzer for use in gas analysis. A cell b, into which a sample gas and a zero gas are alternately indroduced via a three-way valve d, and a sample-concentration detector c are arranged in an optically linear relation relative to a light source a capable of irradiating infrared light beams and a check-signal generating mechanism f comprising a potentiometric circuit called an elechecker is provided between a preamplifier e of said sample-concentration detector c and a sensitivity-calibration circuit g so that the sensitivity can be easily checked without requiring the continuous use of a span-calibration sample (span gas). The elechecker type check-signal generating mechanism f is adapted to be switched over to a state, in which an output signal (sample-concentration signal $V_G$) from the preamplifier e of said sample-concentration detector c is sent to the sensitivity-calibration circuit g as it is during the measurement carried out by introducing a sample into said cell b, and a state in which a check signal $V_c$ obtained by dividing the output signal from said preamplifier e at an appointed ratio is sent to said sensitivity-calibration circuit g during an easy check process carried out by introducing only a zero gas into said cell b.

In addition, also a mechachecker comprising a light-reducing filter and a screen plate, which can be inserted between the light source a and the cell b (or between the cell b and the sample-concentration detector c), as shown in FIG. 3(B), can be used as such a check-signal generating mechanism f in addition to said elechecker comprising a potentiometric circuit. In the case of an absorption analyzer provided with this mechachecker type check-signal generating mechanism f, the sample-concentration signal $V_G$ is obtained from the preamplifier e of said sample-concentration detector c to be sent to said sensitivity-calibration circuit g by pulling said light-reducing filter as the mechachecker out of an optical path, as shown by a dotted line in FIG. 3(B). The measurement is carried out by introducing the sample into said cell b while the check signal $V_c$ is obtained from the preamplifier e of said sample-concentration detector c to be sent to the sensitivity-calibration mechanism g by inserting said light-reducing filter into an optical path, as shown by a full line in FIG. 3(B), or inserting the screen plate into the optical path to an appointed extent during a so-called "easy check" carried out by introducing only the zero gas into said cell b.

The sensitivity-calibration circuit g to which said sample-concentration signal $V_G$ or said check signal $V_c$ is given as an input signal $V_{IN}$, comprises
- an operational amplifier $O_o$ and a thermo-sensor Th and is provided with a temperature-compensation circuit $A_o$ for compensating a temperature-drift of the input signal $V_{IN}$ on the basis of a result detected by the thermo-sensor Th and
- a sensitivity-adjustment circuit C containing an operational amplifier $O_3$ and a sensitivity-adjustment potentiometer VR, as shown in FIG. 4.

The conventional sensitivity-calibration circuit according to Fig. 4 has the disadvantage that a single temperature-compensation circuit $A_o$ is provided for compensation in the measuring state as well as in the checking state. However, in the measuring state the temperature-drifts of the sample system and additonally of the optical system are effective, whereas in the checking state only the temperature-drift of the optical system is effective. Therefore, it is not possible to compensate correctly in both states.

To overcome the just mentioned disadvantage, DD-A-132 814 describes a sensivity-calibration circuit for a none-dispersion type infrared gas analyzer having a temperature-compensation means comprising two temperature-compensation circuits and a switching means. The first circuit compensates for the added temperature-drift, as mentioned above, whereas the second temperature-compensation circuit only compensates for the temperature-drift of the optical system.

It is the object of the present invention to provide a sensitivity-calibration circuit of simple construction but having satisfying temperature-compensation properties in the measuring state as well as in the checking state.

The sensitivity-calibration circuit according to the present invention for an absorption analyzer provided with the check-signal generating means comprises:
- a first, separate temperature compensation circuit within a temperature compensation means for compensating the temperature-drift resulting from the optical system of the analyzer,
- a second, separate temperature-compensation circuit within a temperature compensation means for compensating the temperature-drift resulting from the sample system of the analyzer,
- and a switch means being arranged to connect in a checking state only said first temperature-compensation circuit to the output terminal of said temperature compensation means, and to connect in a normal measuring state a series connection of said first and said second temperature-compensation circuits to said output terminal.

Embodiments of the invention will now be described with reference to the accompanying drawings. In the drawings:

Fig. 1(A) is a block-circuit diagram depicting a fundamental construction of the sensitivity-calibration;

Fig. 1(B) shows another possible embodiment of the constructional features of a sensitivity calibration circuit according to the invention;

Fig. 2 is a block circuit diagram of a preferred embodiment of a sensitivity-calibration circuit comprising features of the invention;

Fig. 3(A) and 3(B) is a principle block diagram of an absorption analyzer, respectively, already discussed above, and

Fig. 4 depicts a block circuit diagrame likewise described above of a conventional sensitivity-calibration circuit in an absorption analyzer.

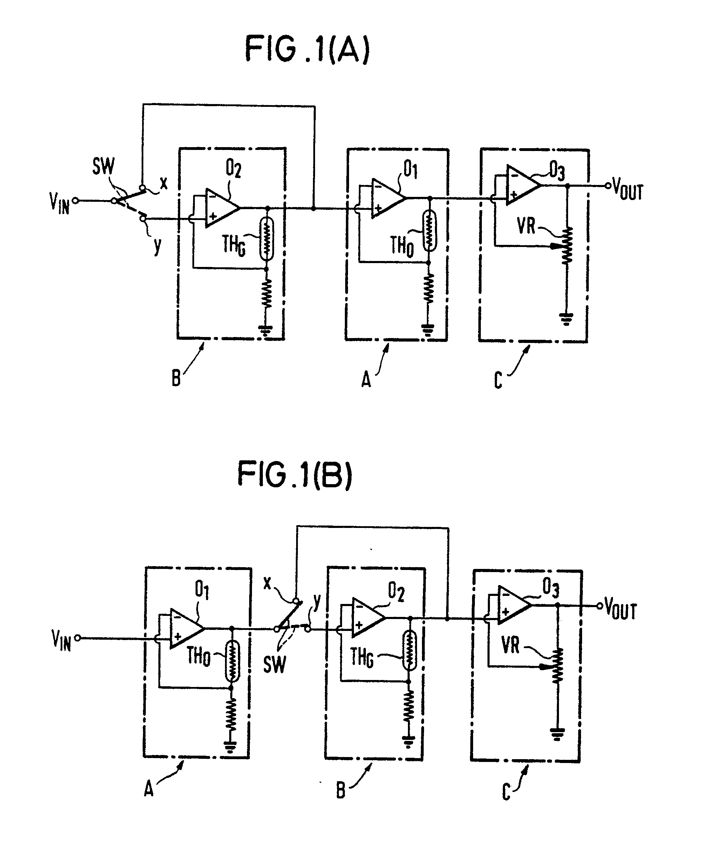

In Fig. 1(A) and Fig. 1(B), C designates a sensitivity-adjustment circuit, reference characters $O_1$, $O_2$, $O_3$ designate operational amplifiers, respectively, $Th_o$, $Th_G$ refer to thermo-sensors, respectively, and VR designates a sensitivity-adjustment potentiometer.

The effects exhibited by the above described characteristical construction are as follows:

With a sensitivity-calibration circuit in an absorption analyzer according to the present invention, since a temperature-drift resulting from the sample system and a temperature-drift due to the optical system are not collectively compensated as in a sensitivity-calibration circuit of conventional construction, a normal temperature-compensation can be achieved in not only a regular sensitivity-calibration and during a usual measurement using a span-calibration sample but also during an easy check without using the span-calibration sample. The circuit comprises a temperature-compensation circuit A for use in an optical system and a separate temperature-compensation circuit B for use in a sample system. A sample-concentration signal $V_G$ as an input signal $V_{IN}$ can be passed through both said temperature-compensation circuit A and said temperature-compensation circuit B via a two positions switch SW. In a first switching position X, $V_{IN}$ is applied to the so-called "concentration measuring side" for a regular sensitivity-calibration and during a usual measurement. In a second switching position y, a check signal $V_c$ can be passed as the input signal $V_{IN}$ only through said temperature-compensation circuit B for use with a sample system simultaneously bypassing said temperature-compensation circuit A. The switching position y is also called the "check side" used during an easy check without using the span-calibration sample. With a circuit arrangement of this type, an accurate sensitivity check or a sensitivity-calibration can be always achieved without the above discussed uncertain reverse effects inherent to the prior art sensitivity-calibrationcircuits described in connection with Figs. 3(A), 3(B) and Fig. 4.

The specific advantage achieved by the two separate compensation circuits A and B may be described by equations similar as above. Provided that a temperature-drift function of the optical system is f(t) and a temperature-drift function of the sample system is g(t), the sample-concentration signal $V_G$ and the check signal $V_c$ may be expressed by the following equations:

$$V_G = c_1 \cdot f(t) \cdot g(t)$$
$$V_c = c_2 \cdot f(t)$$

wherein $c_1$, $c_2$ are constants.

If the gain of said temperature-compensation circuit A for use in the optical system is adjusted to $K_1/f(t)$ and the gain of said temperature-compensation circuit B for use in the sample system to $K_2/g(t)$ in this case, and with the gain G(VR) of the sensitivity-adjustment circuit C, the total gain $G_{TS}$ of the sensitivity-calibration circuit is defined by the following equation in the case where the switch SW is switched to position x.

$$G_{TS} = G(VR) \cdot K_1 \cdot K_2/\{f(t) \cdot g(t)\}$$

Consequently, the output signal $V_{OUT}$ of the sensitivity-calibration circuit during a regular sensitivity-calibration and a usual measurement process using a span-calibration sample is expressed by the following equation:

3

$$V_{OUT} = V_G \cdot G_{TS}$$
$$= c_1 \cdot f(t) \cdot g(t) \times G(VR) \cdot K_1 \cdot K_2 / \{f(t) \cdot g(t)\}$$
$$= c_1 \cdot G(VR) \cdot K_1 \cdot K_2 ,$$

whereby an influence by temperature is eliminated. On the other hand, the total gain $G_{TC}$ of the sensitivity-calibration circuit in the case, where the switch SW is switched to the check side (position y) and the temperature-compensation circuit B is not used, is defined by the equation:

$$G_{TC} = G(VR) \cdot K_1 / f(t)$$

Accordingly, the output signal $V_{OUT}$ of the sensitivity-calibration circuit during an easy check process without using the span-calibration sample is determined by the following equation:

$$V_{OUT} = V_c \cdot G_{TC}$$
$$= V_c \cdot G(VR) \cdot K_1 / f(t)$$
$$= c_2 \cdot G(VR) \cdot K_1 .$$

Also in this case, the temperature influence is eliminated.

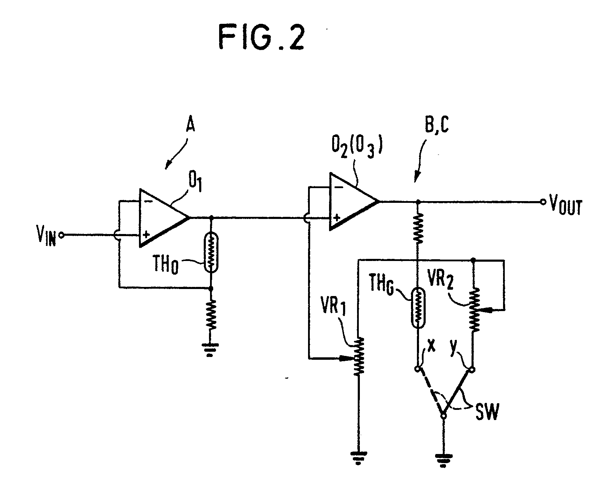

The preferred embodiment of the present invention will be below described with reference to the drawing of Fig. 2.

The sensitivity-calibration circuit for an absorption analyzer according to the present preferred embodiment comprises said temperature-compensation circuit B for use in a sample system and said sensitivity-adjustment circuit C collectively having the fundamental construction shown in FIG. 1(A) or FIG. 1(B). One operational amplifier can be saved by using the operational amplifier $O_2$ in said temperature-compensation circuit B also as the sensitivity-adjustment amplifier $O_3$ in said sensitivity-adjustment circuit C. The sensitivity-adjustment potentiometer VR in said sensitivity-adjustment circuit C is divided into a main sensitivity-adjustment potentiometer $VR_1$ and an auxiliary sensitivity-adjustment potentiometer $VR_2$. The other circuit parts are constructed similar to those shown in FIG. 1(A) or FIG. 1(B).

At first during the regular sensitivity-calibration using the span-calibration sample the switch SW is positioned at the concentration-measuring side x. In this case, the sample-concentration signal $V_G$, in short

$$V_G = c_1 \cdot f(t) \cdot g(t)$$

is supplied as the input signal $V_{IN}$, wherein $c_1$ is a constant.

Provided that the temperature-drift function of the optical system is f(t) and the temperature-drift function of the sample system is g(t), the gain of temperature-compensation circuit A is expressed by K/f(t) while the gain of the temperature-compensation circuit B and the sensitivity-adjustment circuit C is expressed by $G_1(VR_1)/g(t)$, then the total gain $G_{TS}$ of the sensitivity-calibration circuit under this condition is defined by the following equation:

$$G_{TS} = K \cdot G_1(VR_1)/\{f(t) \cdot g(t)\}$$

Accordingly, the output signal $V_{OUT}$ of the sensitivity-calibration circuit during the regular sensitivity-calibration using a span-calibration sample is expressed by the following equation:

$$V_{OUT} = V_G \cdot G_{TS}$$
$$= c_1 \cdot f(t) \cdot g(t) \times K \cdot G_1(VR_1) / \left\{ f(t) \cdot g(t) \right\}$$
$$= c_1 \cdot K \cdot G_1(VR_1) \quad .$$

Consequently, the temperature influence is eliminated, and the output signal $V_{OUT}$ becomes constantly independent of temperatures. The main sensitivity-adjustment potentiometer $VR_1$ serves to adjust $G_1(VR_1)$ so that the output signal $V_{OUT}$ corresponds to the concentration of the span-calibration sample used.

On the other hand, during the first easy check without using the span-calibration sample switch SW is positioned at the check side y. In this case, the check signal $V_c$, in short

$$V_c = c_2 \cdot f(t)$$

is supplied as the input signal $V_{IN}$, wherein $c_2$ is a constant.

Since the thermo-sensor $TH_G$ in the temperature-compensation circuit B is disconnected and the auxiliary sensitivity-adjustment potentiometer $VR_2$ is used, the gain of the temperature-compensation circuit B and the sensitivity-adjustment circuit C is expressed by $G_1(VR_1 \cdot G_2(VR_2)/f(t)$ and the total gain of the sensitivity-calibration circuit under this condition is defined by the following equation:

$$G_{TC} = K \cdot G_1(VR_1) \cdot G_2(VR_2)/f(t).$$

Accordingly, the output signal $V_{OUT}$ from the sensitivity-calibration circuit during the easy check process not using a span-calibration sample is expressed by the following equation:

$$V_{OUT} = V_G \cdot G_{TC}$$
$$= c_2 \cdot f(t) \times K \cdot G_1(VR_1) \cdot G_2(VR_2)/f(t)$$
$$= c_2 \cdot K \cdot G_1(VR_1) \cdot G_2(VR_2)$$

Consequently, also in this case, the temperature influence is eliminated, and the output signal $V_{OUT}$ becomes constantly independent of temperatures. The auxiliary sensitivity-adjustment potentiometer $VR_2$ is operated to adjust and fix $G_2(VR_2)$ so that the output signal $V_{OUT}$ may assume the same value as during the above described regular sensitivity-calibration. In addition, since the ratios of said constants $c_1$, $c_2$ for changing the sensitivity can be made identical by a corresponding adjustment of the auxiliary sensitivity-adjustment potentiometer $VR_2$ , for a subsequent easy check it is only necessary to operate said main sensitivity-adjustment potentiometer $VR_1$.

However, since also usual measurements are carried out under the condition that said switch SW is positioned at the concentration-measuring side x, it goes without saying that the output signal $V_{OUT}$ of the sensitivity-calibration circuit becomes constantly independent of temperatures in the same manner as with the above described regular sensitivity-calibration.

Furthermore, as the expert will realize, the above described sensitivity-calibration circuit according to the present invention can be applied to both cases, i.e. where the sample is a gas (gas analyzer) and the case, where the sample is a liquid (liquid analyzer).

## Claims

1. A sensitivity-calibration circuit for an absorption analyzer provided with a check-signal generating means, said sensitivity-calibration circuit comprising a temperature-compensation means switchable by a switch means between a measuring state and a checking state, said temperature-compensation means comprising:
   - a first, separate temperature-compensation circuit (A) for compensating the temperature-drift resulting from the optical system of the analyzer and

- a second, separate temperature-compensation circuit (B) for compensating the temperature-drift resulting from the sample system of the analyzer and
- said switch means (SW) which are arranged to connect in said checking state only said first temperature-compensation circuit to the output terminal of said temperature-compensation means, and to connect in said measuring state a series connection of said first and said second temperature-compensation circuits (A + B) to said output terminal.

2. The sensitivity-calibration circuit as said forth in claim 1, **characterized by** an amplifier in said second, separate temperature-compensation circuit (B) which is bifunctionally used also as a sensitivity-adjustment amplifier ($O_3$).

**Revendications**

1. Circuit d'étalonnage de sensibilité pour un analyseur par absorption équipé d'un moyen de génération d'un signal de contrôle, ledit circuit d'étalonnage de sensibilité comportant un moyen de compensation en température pouvant être commuté à l'aide d'un commutateur entre un état de mesure et un état de contrôle,ledit moyen de compensation en température comportant:
- un premier circuit distinct de compensation en température (A) afin de compenser la dérive thermique résultant du système optique de l'analyseur et
- un second circuit distinct de compensation en température (B) afin de compenser la dérive thermique dûe au système d'échantillonnage de l'analyseur et
- ledit commutateur (SW) qui est agencé pour relier dans l'état de contrôle seulement ledit premier circuit de compensation en température à la borne de sortie dudit moyen de compensation en température, et pour relier, dans ledit état de mesure, l'ensemble connecté en série desdits premier et second circuits de compensation en température (A + B) à ladite borne de sortie.

2. Circuit d'étalonnage de sensibilité selon la revendication 1, caractérisé par un amplificateur dans ledit second circuit distinct de compensation en température (B) qui est utilisé bifonctionnellement également en tant qu'amplificateur de réglage de sensibilité ($O_3$).

**Patentansprüche**

1. Schaltkreis zur Empfindlichkeitskalibrierung eines Absorptionsanalysegeräts mit einem Prüfsignalgenerator und einer Temperaturkompensationseinrichtung zur Empfindlichkeitskalibrierung, die durch eine Umschalteinrichtung zwischen einem Meß- und einem Prüf-Betriebszustand umschaltbar ist, wobei die Temperaturkompensationseinrichtung folgendes aufweist:
- eine erste, gesonderte Temperaturkompensationsschaltung (A) zum Kompensieren der Temperaturdrift des optischen Systems des Analysegeräts,
- eine zweite, gesonderte Temperaturkompensationsschaltung (B) zum Kompensieren der Temperaturdrift des Probensystems des Analysegeräts,
- und eine Umschalteinrichtung (SW), die in einem Prüfzustand nur die erste Temperaturkompensationsschaltung mit dem Ausgangsanschluß der Temperaturkompensationseinrichtung, dagegen im normalen Meßbetriebszustand die Reihenschaltung (A + B) aus der ersten und der zweiten Temperaturkompensationsschaltung mit dem Ausgangsanschluß verbindet.

2. Schaltkreis zur Empfindlichkeitskalibrierung gemäß Anspruch 1, **gekennzeichnet durch** einen Verstärker der zweiten, gesonderten Temperaturkompensationsschaltung (B), der bifunktionell auch als Empfindlichkeitseinstellverstärker ($O_3$) verwendet wird.

# FIG .1(A)

# FIG .1(B)

FIG.2

# FIG.3(A)

# FIG.3(B)

# FIG.4